Europäisches Patentamt

**European Patent Office**

Office européen des brevets

(19)

(11) Numéro de publication : **0 025 752**
**B1**

(12)

# FASCICULE DE BREVET EUROPÉEN

(45) Date de publication du fascicule du brevet :
**15.12.82**

(51) Int. Cl.³ : **G 01 N 27/56**

(21) Numéro de dépôt : **80401272.2**

(22) Date de dépôt : **05.09.80**

(54) **Dispositif d'insertion d'un senseur dans les conduits d'échappement d'un moteur à combustion interne, et système régulateur du dosage de carburant mettant en œuvre un tel dispositif.**

(30) Priorité : **14.09.79 FR 7922986**

(43) Date de publication de la demande :
**25.03.81 (Bulletin 81/12)**

(45) Mention de la délivrance du brevet :
**15.12.82 Bulletin 82/50**

(84) Etats contractants désignés :
**DE GB IT NL SE**

(56) Documents cités :
**FR A 2 291 357**
**FR A 2 358 656**
**FR A 2 358 657**

(73) Titulaire : **THOMSON-CSF**
**173, Boulevard Haussmann**
**F-75379 Paris Cedex 08 (FR)**

(72) Inventeur : **Croset, Michel**
**"THOMSON-CSF" SCPI 173, bld Haussmann**
**F-75360 Paris Cedex 08 (FR)**
Inventeur : **Velasco, Gonzalo**
**"THOMSON-CSF" SCPI 173,bld Haussmann**
**F-75360 Paris Cedex 08 (FR)**

(74) Mandataire : **Lepercque, Jean et al**
**THOMSON-CSF SCPI 173, Bld Haussmann**
**F-75379 Paris Cedex 08 (FR)**

Jouve, 18, rue St-Denis, 75001 Paris, France

EP 0 025 752 B1

Dispositif d'insertion d'un senseur dans les conduits d'échappement d'un moteur à combustion interne, et système régulateur du dosage de carburant mettant en œuvre un tel dispositif

L'invention concerne un dispositif d'insertion d'un senseur dans les conduits d'échappement d'un moteur à combustion interne, et en particulier un senseur du type capteur électrochimique des concentrations d'espèces dans les gaz d'échappement.

De tels capteurs sont encore appelés sondes λ. Leurs courbes de réponse en tension présentent un basculement brutal à la stœchiométrie du mélange carburant-air dont on désire mesurer les concentrations relatives dans les gaz d'échappement. L'analyse se fait par prélèvement d'échantillons de gaz d'échappement qui seuls sont admis à l'intérieur du capteur (où ils sont amenés à l'équilibre thermodynamique), selon la technique dite de « prise d'essai ». Pour arriver à ce résultat on dispose habituellement en amont du capteur, des moyens qui limitent l'échange gazeux. Les signaux électriques délivrés par un tel capteur sont ensuite exploités par un système de régulation permettant, par exemple, de modifier la proportion air-carburant admise dans les cylindres d'un moteur à combustion. Cette méthode de régulation est bien connue dans le domaine de l'électronique automobile.

Ces capteurs ont été réalisés selon diverses approches : selon une première approche (voir la demande de brevet FR-A-2 358 656), plus ancienne, l'élément actif ou cellule de mesure, en général du type pile à concentration, présente une structure dite « en doigt de gant » ; selon une seconde approche (voir la demande de brevet FR-A-2 291 357), la partie active du capteur est réalisée par les techniques de dépôt en couche mince ou épaisse utilisées pour la fabrication de circuits semi-conducteurs, et présente une structure plane.

Dans tous les cas, on doit insérer la cellule de mesure dans les conduits d'échappement d'un moteur à combustion dont on désire analyser la composition des gaz d'échappement. Pour ce faire, selon l'art connu, on insère la cellule de mesure dans un boîtier présentant la structure générale d'une bougie d'allumage. Ce boîtier doit assurer, d'une part, l'étanchéité absolue entre une première enceinte, ou enceinte de mesure, en contact avec le gaz à analyser, et une seconde enceinte dite de référence et, d'autre part, assurer les liaisons électriques entre la cellule de mesure et des circuits extérieurs d'exploitation des signaux électriques délivrés. Ces diverses exigences conduisent à une structure complexe et relativement coûteuse. D'autre part on doit assurer, en ce qui concerne la seconde approche, l'adaptation entre une géométrie plane, celle de la cellule de mesure et une géométrie cylindrique, celle du boîtier. Enfin certains capteurs plus récents comportent plus de deux connexions électriques, or les structures de boîtiers du type bougie d'allumage se prêtent mal à la sortie de plus de deux connexions.

Outre les difficultés qui viennent d'être signalées, il doit encore être pris en compte la nécessité de transformations des conduits d'échappement existants pour pouvoir y insérer le boîtier contenant la cellule de mesure par vissage. En dernier lieu, le type de capteur qui vient d'être décrit, pouvant présenter une haute impédance de sortie, les isolants doivent être de bonne qualité, ce à haute température, ce qui est difficile à obtenir.

Pour pallier ces inconvénients, l'invention propose un dispositif d'insertion particulièrement adapté à des senseurs de faible dimension et de structure plane, pouvant comporter plus de deux connexions de sortie, dispositif ne mettant en œuvre que des composants simples et bon marché. Pour ce faire, l'invention met à profit la présence de joints de liaison et d'étanchéité existant dans tous les conduits d'échappement, ces joints étant soit les joints entre les lumières d'échappement pratiquées dans la culasse d'un moteur et le collecteur d'échappement, soit le joint entre ce collecteur et le tuyau d'échappement conduisant aux divers silencieux et pot d'échappement.

L'invention a donc pour objet un dispositif d'insertion d'au moins un senseur dans les conduits d'échappement d'un moteur à combustion interne comprenant une culasse munie d'au moins une lumière d'échappement ; senseur destiné à mesurer au moins un des paramètres significatifs des gaz d'échappement circulant à haute température dans les conduits d'échappement, et développant sur des connexions de sortie des signaux électriques représentatifs de ces paramètres ; dispositif principalement caractérisé en ce qu'il comprend formant support du senseur, un élément plan de faible épaisseur constitué d'au moins une feuille de matériau isolant et compressible, résistant aux hautes températures, percée d'au moins une fenêtre de communication laissant le libre passage au gaz d'échappement, pratiquée dans une région centrale de cet élément plan, région où est positionné le senseur maintenu par ses connexions ; et en ce que, l'élément plan étant inséré entre deux ensembles de pièces mécaniques accouplés à l'aide de moyens de fixation, ledit élément plan constitue un joint d'assemblage étanche au gaz d'échappement.

L'invention a encore pour objet un système régulateur du dosage de carburant dans un moteur à combustion comprenant plusieurs cylindres, système caractérisé en ce qu'il est associé à un dispositif d'insertion comportant un senseur par cylindre, et en ce que les signaux de sortie des senseurs sont exploités pour régler le dosage de carburant.

L'invention sera mieux comprise et d'autres caractéristiques apparaîtront à la lecture de la description ci-après en se référant aux dessins annexés parmi lesquels :

les figures 1 et 2 illustrent des dispositifs d'insertion de capteur dans un conduit d'échappement selon l'art connu ;

la figure 3 illustre schématiquement un dispositif d'insertion d'un senseur selon l'invention ;

les figures 4 à 8 illustrent plusieurs variantes d'exécution de l'invention selon une première approche ;

la figure 9 illustre une seconde approche de l'invention ;

la figure 10 illustre le montage de dispositifs d'insertion selon l'invention dans les conduits d'échappement d'un moteur à combustion interne ;

la figure 11 illustre la régulation de l'injection du carburant dans les cylindres d'un moteur à combustion interne mettant en œuvre des senseurs insérés dans les conduits d'échappement à l'aide d'un dispositif selon l'invention.

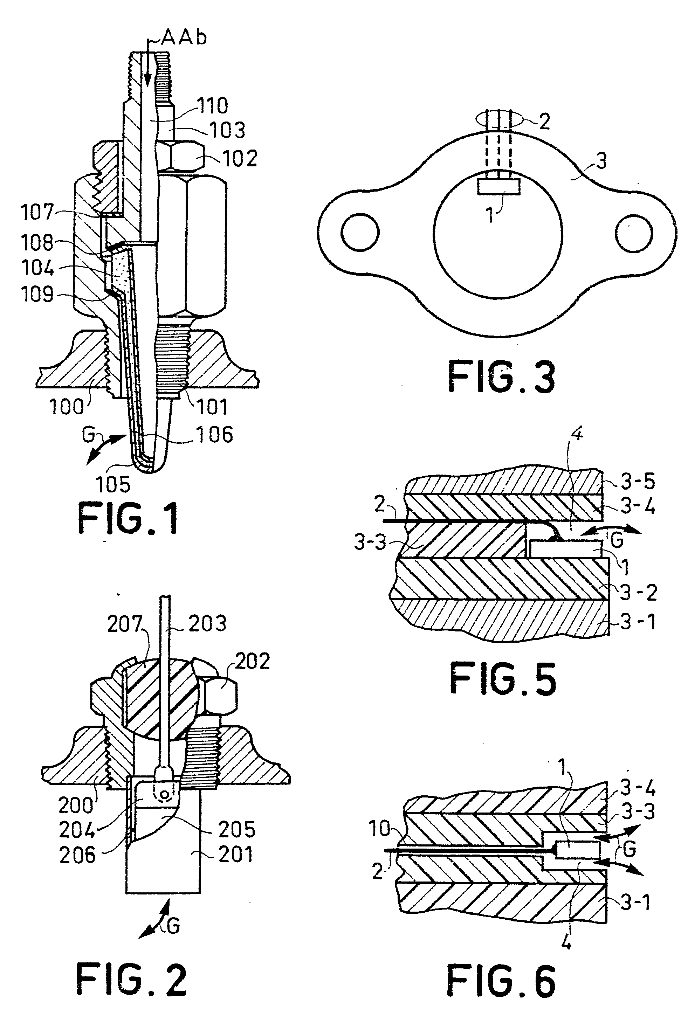

Les dispositifs d'insertion de senseurs dans les conduits d'échappement d'un moteur à combustion interne selon l'art connu présentent en général une structure rappelant celle des bougies d'allumage de ces moteurs. Selon une première approche, plus ancienne, la cellule de mesure proprement dite a une structure dite en forme de « doigt de gant ». Une telle structure est illustrée par la figure 1 : la cellule comporte deux électrodes 105 et 106 déposée de part et d'autre d'un électrolyte solide 104, par exemple de la zircone stabilisée à la chaux, l'électrolyte 104 assurant la rigidité mécanique de la cellule de mesures. L'ensemble est placé dans un boîtier métallique 101 de structure cylindrique destiné à insérer le capteur par vissage dans un conduit d'échappement 100 de façon à ce que la cellule de mesure soit mise en contact avec le gaz d'échappement G. Pour ce type de capteur, l'intérieur du doigt de gant constitue le compartiment de référence dans lequel est amené par le conduit 110, pratiqué dans une seconde pièce métallique 103, un gaz de référence qui est en général constitué par l'air ambiant $AA_b$. Le boîtier doit assurer, d'une part, l'étanchéité et, d'autre part, les liaisons électriques entre les électrodes 105 et 106 et des circuits extérieurs exploitant les signaux délivrés par la cellule de mesure. Pour ce faire, la pièce métallique 103 assure en coopération avec le joint conducteur 108 un premier contact électrique. Un joint également conducteur 109 assure avec le boîtier 101 dans lequel est vissé une troisième pièce métallique 102 le second contact électrique. Un joint 107 isolant permet le découplage électrique des pièces métalliques 102 et 103. L'ensemble présente une structure relativement complexe, risquant de compromettre la fiabilité générale du dispositif ; les points les plus critiques étant constitués par les joints 107 et 109. On doit rappeler ici que les conditions d'environnement des dispositifs coopérant au fonctionnement d'un moteur à combustion interne sont très sévères. Aux différences de pression entre le gaz circulant dans le conduit d'échappement et l'atmosphère, s'ajoutent des différences de température très importantes : à l'intérieur du conduit, le gaz d'échappement atteint couramment une température de l'ordre de 800 °C, la température n'étant plus que de l'ordre de 200 °C sur la pièce 102 et une température légèrement supérieure à l'ambiante au niveau de l'orifice d'entrée du conduit 110. D'autre part, le dispositif est soumis à des vibrations importantes. Enfin toutes ces contraintes entraînent non seulement une dégradation des organes constitutifs du boîtier, mais aussi une dégradation de la cellule de mesure proprement dite : les contraintes peuvent notamment créer des fissures dans l'électrolyte solide.

Aussi, plus récemment, ont été proposées des cellules de mesure électrochimiques réalisées par les techniques de dépôt en couche mince ou épaisse. Les cellules ainsi réalisées sont en général du type à référence interne. Il s'agit de cellules de mesure dont l'une des électrodes combine la fonction électrode et la fonction milieu de référence. On utilise pour ce faire une électrode à base d'une combinaison du type : M-MX ou M est un métal et X un halogène à détecter (par exemple M-MO dans le cas de la détection de l'oxygène, et notamment dans les gaz d'échappement). Un senseur de ce type et son boîtier sont illustrés sur la figure 2. Un senseur dont l'une des électrodes 205 est visible sur la figure est inséré en force dans un boîtier 201 formant contact électrique 206 avec cet électrode. L'autre électrode non visible est reliée à l'extérieur par une connexion électrique 203. L'ensemble est placé dans un boîtier 202 destiné à insérer le capteur ainsi constitué dans un conduit d'échappement 200 par vissage. Le boîtier comprend également un matériau isolant 207 assurant simultanément l'étanchéité du capteur entre le milieu extérieur et l'intérieur du conduit d'échappement. Dans cette approche, bien que la cellule de mesures présente une fiabilité plus élevée, il faut adapter une géométrie plane, celle de la cellule, à une géométrie cylindrique, celle du boîtier. En outre, les deux approches présentent l'inconvénient de nécessiter des transformations dans les conduits d'échappement existant. Enfin, certains senseurs sont munis de plus de deux connexions électriques et des normes adoptées par certains constructeurs imposent une « masse mécanique » distincte de la « masse électrique ». Les boîtiers précédemment décrits sont mal adaptés à ces configurations.

L'invention propose tout au contraire des dispositifs d'insertion simplifiés mettant à profit certains organes existant dans tous les conduits d'échappement des moteurs à combustion interne actuellement utilisés. Le dispositif d'insertion d'un senseur selon l'invention est schématisé sur la figure 3. En effet, pour raccorder deux conduits d'échappement entre eux ou un conduit d'échappement aux lumières d'échappement pratiquées dans la culasse d'un moteur à combustion interne, on utilise des joints, généralement en amiante, assurant l'étanchéité et possédant une bonne tenue aux hautes températures. En outre, les matériaux utilisés, par ailleurs généralement bon marché, sont de bons isolants. Ces joints peuvent donc constituer un support approprié pour insérer un senseur, représenté sous la référence 1 dans les conduits d'échappement. Ce senseur possède des connexions de sortie 2, au nombre de trois sur la figure. Ce nombre peut être quelconque. Le senseur est maintenu en présence des gaz d'échappement par la rigidité de ces connexions enserrées dans le matériau de l'élément 3 qui forme joint entre deux parties constitutives du système d'échappement.

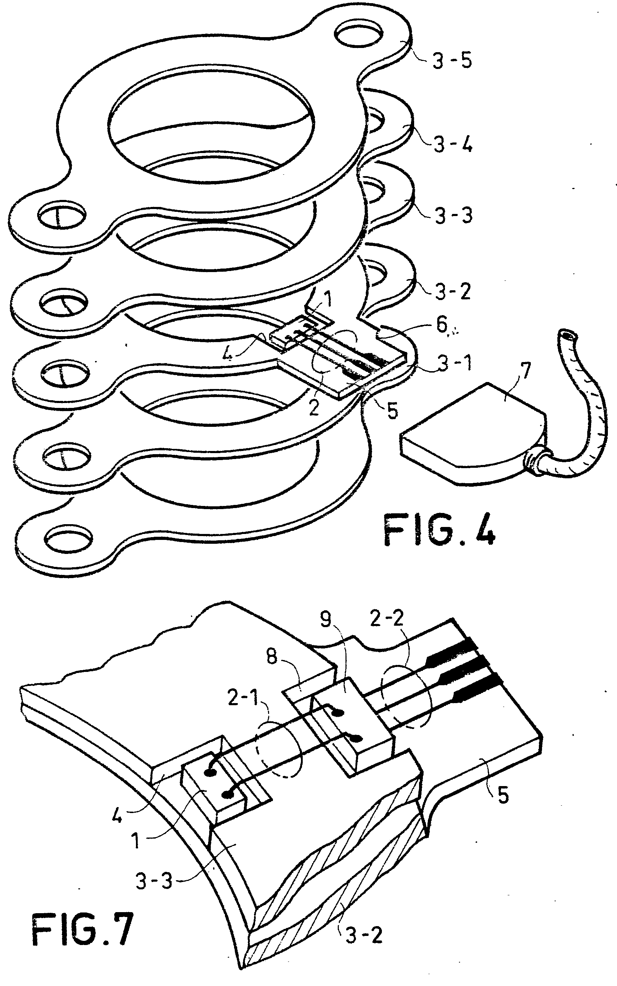

Une première variante de réalisation d'un dispositif d'insertion selon l'invention est illustrée sur la figure 4. Le dispositif est constitué essentiellement par le joint d'étanchéité situé entre le collecteur d'échappement et le tuyau d'échappement conduisant au silencieux et au pot d'échappement. Ce joint comporte en général une ou plusieurs rondelles en amiante 3-2 à 3-4 enserrées entre deux rondelles en métal 3-1 et 3-5. Pour éviter que le senseur soit soumis aux agressions directes du gaz d'échappement, on peut pratiquer dans l'une des rondelles une découpe 4 formant cavité où est placé le senseur à proximité des gaz d'échappement circulant par l'orifice central de cet empilement de rondelles, orifice que l'on appellera dans ce qui suit fenêtre de communication. Les connexions sont sorties vers la périphérie de la rondelle 3-3, que l'on a prolongée avantageusement par une languette 5 munie d'une découpe 6. Cette disposition permet l'enfichage d'un connecteur électrique 7, positionné dans le bon sens grâce à la découpe 6 qui joue le rôle de détrompeur.

Pour le passage des connexions, deux variantes sont illustrées par les figures 5 et 6. Sur la figure 5, les connexions sont simplement maintenues par pressage entre deux couches 3-3 et 3-4 du joint. Les rondelles formant ces couches successives doivent posséder une épaisseur suffisante pour laisser un libre accès des gaz d'échappement au senseur 1. Des senseurs réalisés par des techniques de dépôt en couche mince, par exemple ceux décrits dans la demande de brevet européen N° 79 400 911.8 déposée le 23 Novembre 1979 et publiée sous le N° 0012.647, ont une épaisseur de l'ordre de 0,3 mm, ce qui représente une épaisseur totale y compris les connexions de 1 mm. Les rondelles peuvent avoir une épaisseur typique de 3 mm se réduisant à 2 mm après écrasement lors de la fixation des deux conduits assemblés. Sur la figure 6, la cavité 4 a une épaisseur inférieure à l'épaisseur de la rondelle, elle peut être réalisée en extrudant le matériau. On pratique dans l'épaisseur de ce matériau, dans une direction parallèle au plan de la rondelle, des trous de diamètres égaux ou légèrement supérieurs à celui des fils constituant les connexions électriques 2. Le senseur est ensuite enfilé par ces connexions de façon à ce que celles-ci ressortent vers la périphérie. Après serrage des rondelles, les fils de connexion 2 sont bloqués par l'écrasement du matériau et le maintien mécanique du senseur assuré.

Cette variante de réalisation est particulièrement avantageuse lorsque le joint comporte une rondelle unique épaisse.

Le senseur est en contact avec les gaz d'échappement à une température de l'ordre de 800 à 900 °C. La périphérie de la rondelle est à une température de l'ordre de 200 °C ; on utilise de préférence, pour réaliser les connexions électriques 2, un matériau faiblement conducteur de la chaleur. Le type de senseur utilisé ayant une forte impédance de sortie et les courants électriques mis en jeu étant très faibles la conductivité n'est pas critique. Un exemple de matériau utilisable est l'acier inoxydable.

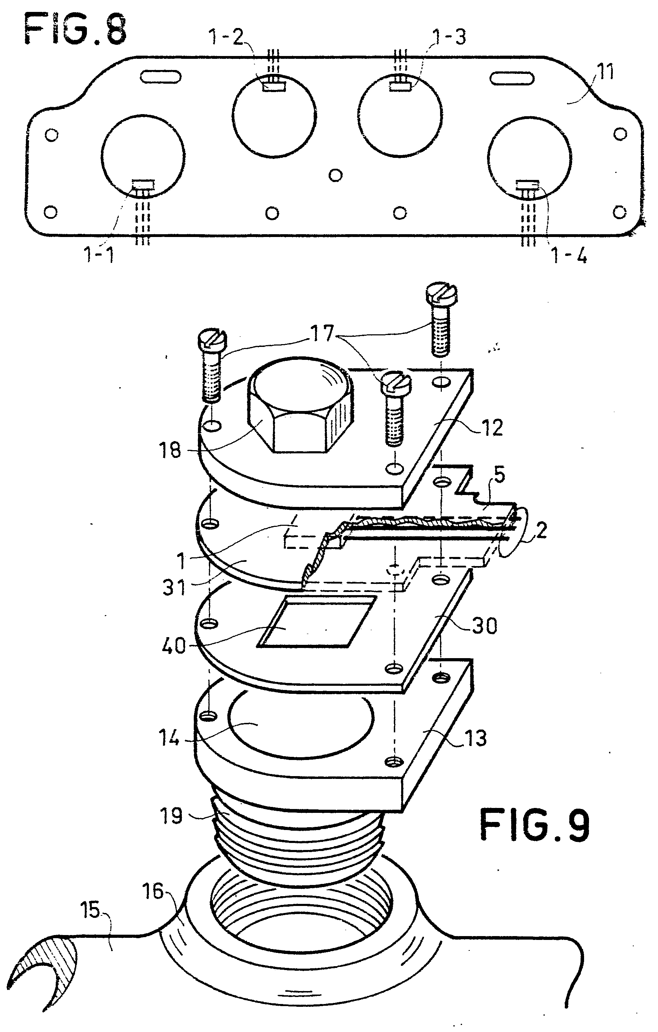

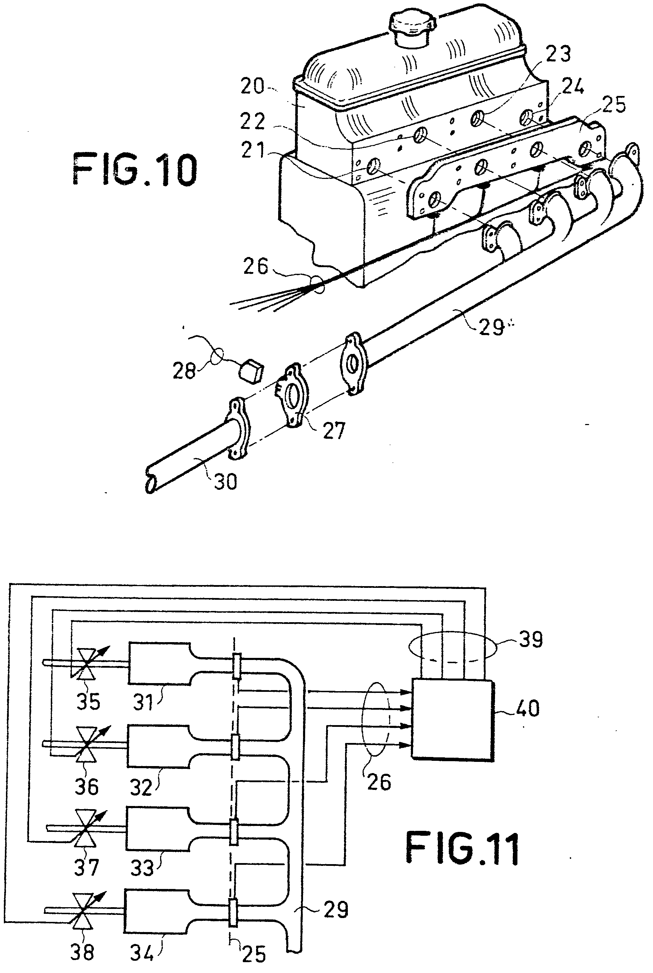

Dans une autre variante, le senseur peut être placé dans le joint situé entre le collecteur et les lumières d'échappement pratiquées dans la culasse du moteur à combustion interne. Cette variante présente l'avantage que la surface du moteur est à une température plus basse, que la surface des conduits d'échappement. En effet, cette température est de l'ordre de 100 °C. En général, lorsque le moteur comporte plusieurs cylindres et plusieurs lumières d'échappement, le joint est une pièce unique comportant plusieurs fenêtres de communication s'adaptant sur les lumières d'échappement. Il est alors avantageux, pour certaines applications dont l'une sera décrite ultérieurement au regard de la figure 11, d'associer à chacun de ces orifices un senseur. Une telle variante est illustrée par la figure 8. Le joint se présente sous la forme d'une pièce unique 11, support d'insertion des senseurs 1-1 à 1-4.

Il est également avantageux, spécialement pour des dispositifs d'insertion réalisés selon la variante de la figure 7, de prévoir en périphérie des éléments constituant le joint, un module comportant des circuits électroniques, assurant l'interface électrique entre le senseur et des circuits extérieurs d'exploitation des signaux délivrés par les senseurs.

Une telle disposition est illustrée par la figure 7. On prévoit à proximité de la languette 5, sur laquelle s'enfiche le connecteur électrique 7 (figure 4), une seconde cavité 8 dans laquelle on place un module 9 assurant, par exemple, l'adaptation d'impédance électrique entre le senseur, comportant par exemple une cellule de mesure du type pile à concentration possédant une haute impédance de sortie, et des circuits extérieurs d'exploitation. Pour ce faire des signaux délivrés par le senseur 1 sont transmis au module 9, par exemple un circuit intégré hybride, par les connexions 2-1 reliées aux bornes d'entrée de ce module. Des connexions de sortie 2-2 représentées à titre d'exemple au nombre de trois véhiculent les signaux de sortie et alimentent les circuits électroniques du module en énergie électrique. La température régnant dans la cavité 8, en particulier dans la variante présentée en relation avec la figure 7, est de l'ordre de 150 °C, ce qui est compatible avec les possibilités de tenue en température de certains éléments semi-conducteurs actuellement utilisés.

Les variantes de réalisation selon une première approche de l'invention, présentées au regard des figures 3 à 8, ne nécessitent aucune transformation des conduits d'échappement et sont particulièrement adaptées pour des senseurs de structure plane. Cependant dans certains pays des normes peuvent obliger les constructeurs à prévoir à l'origine des supports normalisés, par exemple à vis, pour insérer un senseur dans les conduits d'échappement. L'invention est également applicable à des dispositifs d'insertion par vissage. Un exemple d'une telle réalisation selon cette approche est illustré par la figure 9. Le dispositif comporte deux pièces métalliques : une première pièce métallique 12 possédant une face inférieure plane et munie d'un écrou d'entraînement 18 sur son autre face ; et une seconde pièce métallique 13 possédant également une face plane et munie sur son autre face d'un filetage 19 destiné à l'insertion par vissage dans l'organe d'adaptation 16 prévu sur le conduit d'échappement 15. Le dispositif selon l'invention prévoit par exemple deux joints 30 et 31 entre lesquels le senseur 1 sera maintenu par serrage à l'aide de ses connexions 2. L'élément 30 est muni d'une fenêtre 40 donnant sur un canal 14 pratiqué dans la pièce métallique 13 de façon à mettre le senseur en communication avec les gaz d'échappement. L'un des éléments de l'empilement comporte également une languette 5 le prolongeant, sur laquelle un connecteur peut être enfiché (comme dans le cas de la figure 4). En outre, des moyens de fixation, par exemple à vis 17, sont prévus. Les éléments 30 et 31 forment joint d'étanchéité et peuvent être réalisés en amiante, de façon analogue au joint d'étanchéité des conduits d'échappement précédemment décrits. Ce dispositif selon l'invention, réalisé en matériau bon marché possède donc une structure très simple bien adaptée à la géométrie plane du senseur 1. Un module d'adaptation, comme dans le cas de la figure 7, peut également être prévu.

La figure 10 illustre deux possibilités de montage des dispositifs d'insertion selon les variantes de réalisation des figures 3 à 8. A titre d'exemple, le moteur à combustion interne 20 possède quatre cylindres et des lumières d'échappement 21 à 24, une par cylindre. Selon la variante décrite en relation avec la figure 8, le dispositif d'insertion comprend quatre senseurs et dans ce cas forme joint entre la culasse et le collecteur d'échappement 29. Les sorties de ces senseurs sont transmises à des circuits extérieurs non représentés par le câble 26. Le senseur peut être également inséré, par exemple à l'aide d'un dispositif d'insertion décrit au regard de la figure 4, entre le collecteur 29 et le tuyau d'échappement 30. Les signaux délivrés par le senseur associé au dispositif 27 sont recueillis par le câble 28.

Sur la figure 11 est décrit un exemple d'application de senseurs à la régulation de l'injection ou plus généralement du dosage de carburant admis dans les cylindres d'un moteur à combustion interne et mettant en œuvre un dispositif d'insertion selon la variante décrite en relation avec la figure 8. On peut en effet avantageusement analyser, individuellement, le gaz d'échappement de chacun des cylindres. Ces cylindres au nombre de quatre dans l'exemple considéré, sont symbolisés par les références 31 à 34. Le dispositif d'insertion, comportant également quatre senseurs et formant joint d'étanchéité entre les lumières d'échappement pratiquées sur la culasse du moteur et le collecteur d'échappement 29, est représenté par la référence 25. Ce dispositif est analogue à celui représenté sur la figure 10. Les signaux délivrés par les quatre senseurs sont transmis par le câble 26 à des circuits d'exploitation 40. On munit chaque arrivée de carburant d'un injecteur ou d'un carburant pouvant être réglé individuellement 35 à 38.

Les circuits d'exploitation 40 des signaux délivrés par les senseurs élaborent quatre signaux de commande utilisés pour le réglage individuel de ces injecteurs. La commande des injecteurs peut se faire par voie électrique comme suggérée par la référence 39 sur la figure 11 ou par tout autre moyen approprié, et notamment par couplage mécanique, ce qui est généralement le cas pour un carburateur. Les procédés mis en œuvre pour la régulation sortent du cadre de l'invention et ne seront pas décrits plus avant. Le dispositif d'insertion, et en particulier la variante de réalisation selon la figure 8, est particulièrement adapté à l'application illustrée par la figure 11, car il autorise une insertion optimum des senseurs permettant de mettre en évidence les paramètres de fonctionnement individuel de chacun des cylindres.

On peut également pondérer les mesures fournies par les senseurs et ne commander qu'un organe unique de dosage du carburant, notamment dans le cas le plus répandu des moteurs alimentés par un carburateur unique. Cette méthode présente l'avantage que le moteur puisse continuer à fonctionner même en cas de défaillance grave d'un des senseurs (rupture d'une liaison électrique par exemple).

L'invention n'est pas limitée aux seuls exemples de réalisation qui viennent d'être décrits. On peut notamment utiliser d'autres matériaux que l'amiante dont sont constitués généralement les joints d'étanchéité des conduits d'échappement. L'invention n'est pas limitée non plus aux véhicules automobiles mais peut être appliquée à toutes machines mettant en œuvre un moteur à combustion interne, quel que soit le nombre de cylindres. Des senseurs, autres que ceux mettant en œuvre une cellule de mesure du type pile à concentration peuvent être insérés à l'aide de dispositifs conformes à l'invention. On peut citer, de façon non limitative, des capteurs mettant en œuvre une variation de résistance ou des capteurs à thermocouple.

## Revendications

1. Dispositif d'insertion d'au moins un senseur (1) dans les conduits d'échappement d'un moteur à combustion interne comprenant une culasse munie d'au moins une lumière d'échappement ; senseur destiné à mesurer au moins un des paramètres significatifs des gaz d'échappement (G) circulant à haute température dans les conduits d'échappement, et développant sur des connexions de sortie (2) des signaux électriques représentatifs de ces paramètres ; dispositif caractérisé en ce qu'il comprend, formant support du senseur, un élément plan (3, 11, 30/31) de faible épaisseur constitué d'au moins une feuille de matériau isolant et compressible, résistant aux hautes températures, percée d'au moins une fenêtre de communication laissant le libre passage aux gaz d'échappement, pratiquée dans une région centrale de cet élément plan, région où est positionné le senseur maintenu par ses connexions ; et en ce que, l'élément plan étant inséré entre deux ensembles de pièces mécaniques accouplés à l'aide de moyens de fixation, ledit élément plan constitue un joint d'assemblage étanche aux gaz d'échappement.

2. Dispositif selon la revendication 1, caractérisé en ce qu'en outre une cavité (4) également pratiquée dans ladite région centrale et communiquant avec ladite fenêtre de communication est ménagée dans l'épaisseur de l'élément plan (3) et en ce que le senseur (1) est placé dans cette cavité.

3. Dispositif selon l'une quelconque des revendications 1 à 2, caractérisé en ce que l'élément plan (3) comporte une languette (5) le prolongeant en périphérie et en ce que les connexions de sortie (2) du senseur (1) sont rendues solidaires de cette languette ; un connecteur électrique (7) pouvant être enfiché sur cette languette pour établir des liaisons électriques avec des dispositifs extérieurs d'exploitation de signaux électriques délivrés par le senseur.

4. Dispositif selon la revendication 3, caractérisé en ce que au voisinage de la languette (5) une cavité supplémentaire (8) est ménagée dans l'élément plan (3) et en ce que des circuits d'adaptation d'impédance électrique (9) sont disposés dans cette cavité ; les circuits (9) comprenant des bornes d'entrée reliées aux connexions de sortie (2-1) du senseur et des bornes de sortie reliées à des connexions (2-2) rendues solidaires de la languette (5).

5. Dispositif selon l'une quelconque des revendications 1 à 4, caractérisé en ce que, les conduits d'échappement comprenant un collecteur d'échappement (29) et un tuyau d'échappement (30), les deux ensembles de pièces mécaniques accouplés sont constitués respectivement par ce collecteur d'échappement et ce tuyau d'échappement.

6. Dispositif selon l'une quelconque des revendications 1 à 4, caractérisé en ce que, les conduits d'échappement comprenant un collecteur d'échappement (29), les deux ensembles de pièces mécaniques accouplés sont constitués respectivement par la culasse (20) et ce collecteur d'échappement (29).

7. Dispositif selon la revendication 6, caractérisé en ce qu'en outre le moteur comprenant plusieurs cylindres (31 à 34) munis chacun d'une lumière d'échappement (21 à 24) pratiquée dans la culasse, l'élément plan (11) comporte autant de fenêtres de communication que de lumières d'échappement, et en ce que à chacune de ces fenêtres de communication est associé un senseur (1-1 à 1-4).

8. Dispositif selon l'une quelconque des revendications 1 à 4, caractérisé en ce que les deux ensembles de pièces mécaniques accouplés comprennent respectivement une première pièce métallique pleine (12), comportant au moins une face plane accolée à l'une des faces de l'élément plan (30/31), et une seconde pièce métallique (13) pouvant être insérée par vissage dans un conduit d'échappement (15) et comportant en une seconde extrémité une face plane accolée à la seconde face de l'élément plan (30/31) ; un canal (14) mettant en communication la fenêtre de communication pratiquée dans la région centrale de l'élément plan (30) avec les gaz d'échappement (G) circulant à l'intérieur du conduit.

9. Dispositif selon l'une quelconque des revendications 1 à 8, caractérisé en ce que le matériau constituant l'élément est de l'amiante.

10. Système régulateur du dosage de carburant dans un moteur à combustion interne comprenant plusieurs cylindres (31 à 34) ; système caractérisé en ce qu'il est associé à un dispositif d'insertion selon la revendication 7 comprenant un senseur (1-1 à 1-4) par cylindre et en ce que les signaux de sortie de ces senseurs sont exploités pour régler le dosage de carburant.

**Claims**

1. Device for inserting at least one sensor (1) into the exhaust conduits of an internal combustion engine comprising a cylinder head provided with at least one exhaust opening ; the sensor being provided for measurement of at least one of the significant parameters of the exhaust gas (G) flowing under high temperature through the exhaust conduits, and generating electric signals on its output terminals (2) representative of these parameters ; the device being characterized in that it comprises a plane member (3, 11, 30/31) forming the support of the sensor and having reduced thickness, and being formed of at least one sheet of an insulating, compressible and high temperature resistant material, the sheet being perforated by at least one communication window allowing free passage of the exhaust gas, and formed in a central region of this plane member where the sensor is positioned and held by its terminals ; and in that the plane member is inserted between two sets of mechanic parts coupled by fixing means, said plane member forming a mounting seal impervious to the exhaust gas.

2. Device of claim 1, characterized in that, in addition, a cavity (4) also formed in said central region and communicating with said communication window is formed in the thickness of the plane member (3) and in that the sensor (1) is placed in that cavity.

3. Device of claims 1 or 2, characterized in that the plane member (3) comprises a lug (5) by which it is extended on its periphery and in that the output terminals (2) of the sensor (1) are integrally connected to this lug ; an electric connector (7) being adapted to fit on this lug for making the electric connections with external devices for processing the electric signals generated by the sensor.

4. Device in accordance with claim 3, characterized in that an additional cavity (8) is formed in the plane member (3) in the neighborhood of the lug (5) and in that electric impedance adaptor circuits (9) are located in this cavity ; the circuits (9) comprising input terminals connected to the output terminals (2-1) of the sensor and output terminals connected to terminals (2-2) integrally connected to the lug (5).

5. Device in accordance with any of claims 1 to 4, characterized in that the exhaust conduits comprising an exhaust manifold (29) and an exhaust pipe (30), the two sets of coupled mechanic parts are formed by this exhaust manifold and the exhaust pipe, respectively.

6. Device in accordance with any of claims 1 to 4, characterized in that the exhaust conduits comprising an exhaust manifold (29), the two sets of coupled mechanic parts are formed by the cylinder head (20) and the exhaust manifold (29), respectively.

7. Device of claim 6, characterized in that, the engine comprising a plurality of cylinders (31 to 34) each provided with an exhaust opening (21 to 24) formed in the cylinder head, the plane member (11) comprises as many communication windows as exhaust openings, and in that one sensor (1-1 to 1-4) is associated with each of these communication windows.

8. Device in accordance with any of claims 1 to 4, characterized in that the two sets of coupled mechanic parts comprise a first plain metallic part (12) having at least one plane face applied against one of the faces of the plane member (30-31), and a second metallic part (13), respectively, adapted to be inserted by screwing into an exhaust conduit (15), and comprising a plane face on its second end applied against the second end face of the plane member (30-31) ; a passage (14) communicating the communication window formed in the central region of the plane member (30) with the exhaust gas (G) flowing inside the conduit.

9. Device in accordance with any of claims 1 to 8, characterized in that the material forming the member is asbestos.

10. Fuel metering regulation system in an internal combustion engine comprising a plurality of cylinders (31 to 34) ; the system being characterized in that it is associated with an insertion device in accordance with claim 7, comprising one sensor (1-1 to 1-4) per cylinder, and in that the output signals of these sensors are processed for fuel metering regulation.

**Ansprüche**

1. Vorrichtung zur Einfügung wenigstens eines Fühlers (1) in den Auspuffleitungen eines Motors mit innerer Verbrennung, der einen Zylinderkopf mit wenigstens einer Auspufföffnung umfaßt ; wobei der Fühler dazu bestimmt ist, wenigstens einen der Parameter zu messen, die für die Auspuffgase (G), die mit hoher Temperatur in den Auspuffleitungen strömen, von Bedeutung sind und an seinen Ausgangsanschlüssen (2) elektrische Signale abgibt, welche diese Parameter darstellen ; wobei die Vorrichtung dadurch gekennzeichnet ist, daß sie ein ebenes, einen Träger des Fühlers bildendes Element (3, 11, 30/31) geringer Dicke umfaßt, das aus wenigstens einer Folie aus einem isolierenden und kompressiblen Material, das hohen Temperaturen widersteht, gebildet ist, welche durch wenigstens ein Verbindungsfenster durchbrochen ist, das den Auspuffgasen freien Durchgang gewährt und in einem zentralen Bereich dieses ebenen Elementes angebracht ist, wo der an seinen Anschlüssen gehaltene Fühler positioniert ist ; und daß das ebene Element, welches zwischen zwei Einheiten von mechanischen, durch Befestigungsmittel aneinander angekoppelten Teilen eingefügt ist, eine für die Auspuffgase dichte Montagedichtung bildet.

2. Vorrichtung nach Anspruch 1, dadurch gekennzeichnet, daß ferner ein Hohlraum (4), der ebenfalls in dem zentralen Bereich angebracht ist und der mit dem Verbindungsfenster in Verbindung ist, in der Dicke des ebenen Elementes (3) angebracht ist und daß der Fühler (1) in diesem Hohlraum angeordnet ist.

3. Vorrichtung nach Anspruch 1 oder 2, dadurch gekennzeichnet, daß das ebene Element (3) eine dieses am Umfang verlängernde Zunge (5) umfaßt und daß die Ausgangsanschlüsse (2) des Fühlers fest mit dieser Zunge verbunden sind, wobei ein elektrisches Anschlußelement (7) auf diese Zunge aufgesteckt werden kann, um die elektrischen Verbindungen mit äußeren Vorrichtungen zur Auswertung der von dem Fühler abgegebenen elektrischen Signale herzustellen.

4. Vorrichtung nach Anspruch 3, dadurch gekennzeichnet, daß in der Nähe der Zunge (5) ein weiterer Hohlraum (8) in dem ebenen Element (3) angebracht ist und daß elektrische Impedanzanpassungsschaltungen (9) in diesem Hohlraum angeordnet sind ; wobei diese Schaltungen (9) Eingangsanschlüsse aufweisen, die mit den Ausgangsanschlüssen (2-1) des Fühlers verbunden sind, und Ausgangsanschlüsse aufweisen, die an Verbindungen (2-2) angeschlossen sind, die mit der Zunge (5) fest verbunden sind.

5. Vorrichtung nach einem der Ansprüche 1 bis 4, dadurch gekennzeichnet, daß, wenn die Auspuffleitungen einen Auspuffsammelraum (29) und ein Auspuffrohr (30 umfassen, die beiden Einheiten von einander angekoppelten mechanischen Teilen durch diesen Auspuffsammelraum bzw. dieses Auspuffrohr gebildet sind.

6. Vorrichtung nach einem der Ansprüche 1 bis 4, dadurch gekennzeichnet, daß, wenn die Auspuffleitungen einen Auspuffsammelraum (29) umfassen, die beiden Einheiten von aneinander angekoppelten mechanischen Teilen durch den Zylinderkopf (20) bzw. den Auspuffsammelraum (29) gebildet sind.

7. Vorrichtung nach Anspruch 6, dadurch gekennzeichnet, daß, wenn der Motor ferner mehrere Zylinder (31 bis 34) umfaßt, die jeweils eine in dem Zylinderkopf angebrachte Auspufföffnung (21 bis 24) aufweisen, das ebene Element (11) ebenso viele Verbindungsfenster aufweist wie Auspufföffnungen vorhanden sind, und daß jedem dieser Verbindungsfenster ein Fühler (1-1 bis 1-4) zugeordnet ist.

8. Vorrichtung nach einem der Ansprüche 1 bis 4, dadurch gekennzeichnet, daß die beiden Einheiten von einander angekoppelten mechanischen Teilen jeweils ein erstes Vollmaterial-Metallteil (12), das wenigstens eine ebene, gegen eine der Flächen des ebenen Elementes (30-31) angelegte Fläche aufweist, und ein zweites Metallteil (13) umfassen, das durch Schraubbefestigung in eine Auspuffleitung (15) eingefügt werden kann und an einem zweiten Ende eine ebene Fläche aufweist, die an die zweite Fläche des ebenen Elementes (30-31) angelegt ist ; wobei ein Kanal (14) das Verbindungsfenster in dem zentralen Bereich des ebenen Elementes (30) mit den im Inneren der Leitung strömenden Auspuffgasen (G) in Verbindung bringt.

9. Vorrichtung nach einem der Ansprüche 1 bis 8, dadurch gekennzeichnet, daß das Material, aus dem das Element gebildet ist, Asbest ist.

10. Regelsystem für die Kraftstoffdosierung in einem Motor mit innerer Verbrennung, der mehrere Zylinder (31 bis 34) enthält ; wobei das System dadurch gekennzeichnet ist, daß es einer Einfügungsvorrichtung nach Anspruch 7 zugeordnet ist, die einen Fühler (1-1 bis 1-4) pro Zylinder aufweist, und daß die Ausgangssignale dieser Fühler ausgewertet werden, um die Kraftstoffdosierung zu regeln.

FIG.1

FIG.3

FIG.5

FIG.2

FIG.6

FIG.4

FIG.7

FIG.8

FIG.9

FIG.10

FIG.11